# FASCICULE DE BREVET EUROPEEN

(11) **EP 1 938 242 B1**
(45) Date de publication et mention de la délivrance du brevet: **25.08.2010**
(21) Numéro de dépôt: 06808059.7
(22) Date de dépôt: 01.09.2006
(51) Int. Cl.: G06K 7/00, G06K 19/07

(54) **LECTEUR NFC AYANT UN MODE DE FONCTIONNEMENT PASSIF A FAIBLE CONSOMMATION ELECTRIQUE**
NFC-LESEGERÄT MIT PASSIVEM BETRIEBSMODUS MIT GERINGEM ENERGIEVERBRAUCH
NFC READER HAVING A LOW ENERGY CONSUMPTION PASSIVE OPERATING MODE

(30) Priorité: 17.10.2005 FR 0510590
(43) Date de publication de la demande: 02.07.2008
(73) Titulaire: STMICROELECTRONICS SA, 92120 Montrouge (FR)
(72) Inventeur: MANI, Christophe, F-84300 Cavaillon (FR); DELL'OVA, Francis, F-13100 Aix en Provence (FR); RIZZO, Pierre, F-13100 Aix en Provence (FR)
(74) Mandataire: de Beaumont, Michel
(86) Numéro de dépôt international: PCT/FR2006/002013
(87) Numéro de publication internationale: WO 2007/045732

(56) Documents cités:
- US-A1- 2005 222 961
- "NEAR FIELD COMMUNICATION PN531-MUC BASED TRANSMISSION MODULE" PHILIPS SEMICONDUCTORS. SHORT FORM SPECIFICATION, XX, XX, février 2004 (2004-02), pages 1-19, XP007900763

## Description

La présente invention concerne les procédés de transmission de données par couplage inductif et plus particulièrement les lecteurs de circuits intégrés sans contact fonctionnant par couplage inductif. De tels lecteurs revêtent diverses désignations, notamment "PCD" (Proximity Coupling Device), "VCD" (Vicinity Coupling Device), "coupleur inductif"...

Les procédés de transmission de données par couplage inductif ont été originellement développés pour les applications RFID (Radio Frequency Identification), afin de lire des étiquettes électroniques sans contact (identification de produits) ou des badges sans contact (identification de personnes). En raison des progrès technologiques effectués ces dernières années, ces procédés sont aujourd'hui d'une mise en oeuvre aisée et sont considérés comme formant une technique de transmission de données à part entière, qui n'est pas seulement réservée aux applications d'identification mais peut servir à créer un canal de communication RF entre deux dispositifs pour réaliser toutes sortes de transactions de proximité.

Ainsi, bien qu'originellement prévus pour permettre un échange de données entre un circuit intégré sans contact et un lecteur à couplage inductif, il est apparu avantageux d'appliquer ces procédés à l'échange de données entre lecteurs à couplage inductif. Plus particulièrement, deux "modèles" de communication ont été envisagés pour établir un canal de communication RF entre deux lecteurs.

Selon le premier modèle, chaque lecteur se place alternativement dans un mode actif ou dans un mode passif selon qu'il doit envoyer des données à l'autre lecteur ou recevoir des données de l'autre lecteur. Ainsi, le lecteur devant envoyer des données émet un champ magnétique alternatif oscillant à une fréquence porteuse Fc (de 13,56 MHz selon les normes ISO/IEC 14443 et ISO/IEC 15693) et module l'amplitude du champ magnétique comme s'il s'adressait à un circuit intégré sans contact. Le lecteur devant recevoir les données n'émet pas de champ magnétique et reçoit un signal d'antenne image du champ magnétique.

Selon le second modèle, l'un des lecteurs se place dans le mode actif et l'autre lecteur se place dans le mode passif pour toute la durée de la communication. La transmission de données du lecteur en mode actif vers le lecteur en mode passif est comme précédemment assurée par modulation de l'amplitude du champ magnétique émis. La transmission de données du lecteur en mode passif vers le lecteur en mode actif est assurée par modulation de l'impédance de la bobine d'antenne du lecteur en mode passif (nommée également rétromodulation). Cette modulation d'impédance fait apparaître, dans le circuit d'antenne du lecteur en mode actif, un signal de modulation de charge qui est mélangé au signal d'excitation et est extrait au moyen de filtres appropriés.

Le mode passif du modèle 2, par contraste avec le mode actif/passif alterné du modèle 1, est appelé mode "émulation". En effet le lecteur en mode passif se "comporte" comme un circuit intégré sans contact, tant pour recevoir des données que pour émettre des données.

Ces procédés de transmission de données entre lecteurs à couplage inductif offrent ainsi diverses perspectives d'application. Baptisés "NFC" (Near Field Communication) par la communauté industrielle, un forum leur est consacré (http://www.nfc-forum.org/home). NFC se défini comme une plate-forme ouverte concernant une technologie définie par les documents ECMA 340 (http://www.ecma-international. org/publications/standards/Standard.htm), ETSI TS 102 190 V1.1.1 et ISO/IEC 18092. Ces documents définissent les protocoles ("schemes") de modulation, de codage, les vitesses de transfert de données, et les formats de trames pour l'interface RF des lecteurs NFC, ainsi que les protocoles d'initialisation de communication requis pour le contrôle de collisions de données pendant l'initialisation, tant en mode actif qu'en mode passif. Cependant, l'appellation "NFC" dans la présente demande désigne de façon plus générale un lecteur capable de dialoguer avec un autre lecteur.

Parallèlement au développement de la technologie NFC, il est devenu courant d'intégrer des lecteurs à couplage inductif dans des appareils électroniques portables comme les téléphones mobiles, les PDA (Assistant Numérique Personnel) et les ordinateurs portables. Or, dans de telles applications, l'implémentation de la technique NFC présente un intérêt majeur car l'appareil électronique portable peut alors échanger des données avec un autre appareil électronique portable par couplage inductif. La technique NFC confère ainsi aux appareils électroniques portables des fonctionnalités étendues en sus des fonctionnalités GSM, Bluetooth® et WiFi, avec possibilité de prévoir des interdépendances entre ces fonctionnalités, par exemple l'utilisation d'une communication NFC pour initialiser une communication Bluetooth® entre deux mobiles.

L'implémentation du mode émulation dans un lecteur NFC embarqué dans un appareil électronique portable offre comme avantage supplémentaire le fait que l'appareil portable devient utilisable comme une carte à puce sans contact, dans des applications de contrôle d'accès ou des applications d'identification, par exemple le contrôle de l'accès à des services de transport public : métro, autobus... Ces applications étant payantes, elles doivent être sécurisées. Or, une telle sécurisation implique que le fonctionnement du lecteur NFC soit assujetti à la présence, dans le lecteur, d'un module de sécurité amovible, fourni à l'abonné par le ou les fournisseurs de services et devant être inséré dans le lecteur.

En sus de ces contraintes sécuritaires qui imposent la prévision d'un module de sécurité amovible, il est souhaité que le lecteur NFC dans le mode émulation puisse être alimenté électriquement par le champ magnétique émis par le lecteur en mode actif. On souhaite en effet que la batterie de l'appareil dans lequel le lecteur est embarqué ne soit pas sollicitée pendant une communication, tant pour préserver la charge de la batterie que pour permettre au mode émulation d'être utilisable lorsque la batterie est totalement vide. En effet, si un téléphone mobile ou un PDA est utilisé en tant que carte à puce sans contact pour permettre à l'usager d'accéder à un service de transport, l'accès à ce service ne doit pas dépendre de l'état de la batterie du téléphone mobile ou du PUA.

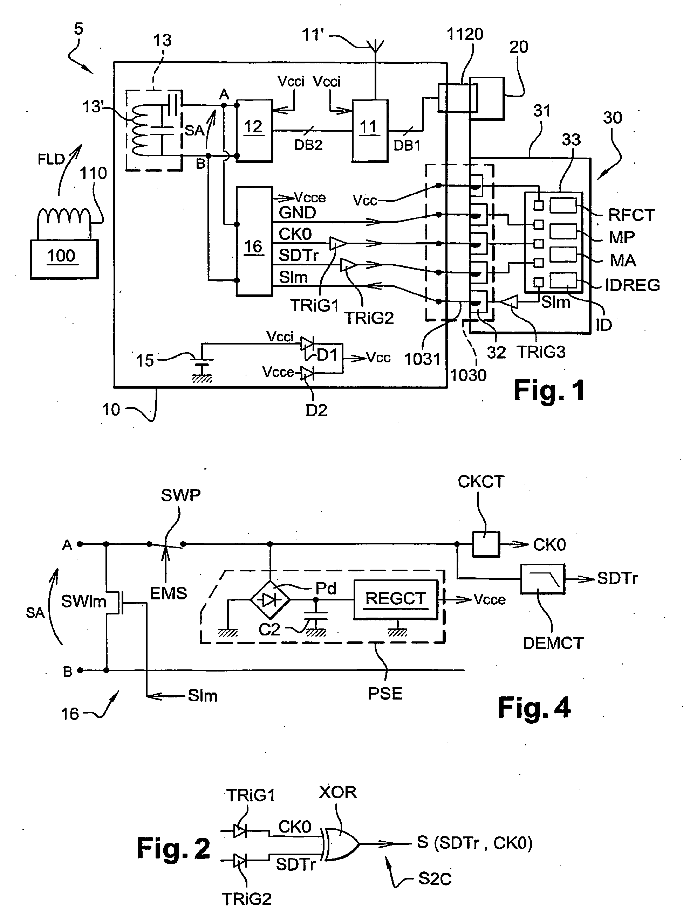

Un tel objectif est toutefois plus difficile à atteindre avec un lecteur NFC équipé d'un module de sécurité amovible qu'avec une simple carte à puce sans contact, pour des raisons qui seront comprises en se référant à la figure 1.

La figure 1 illustre schématiquement l'architecture d'un système électronique 5 classique pour téléphone mobile incorporant un lecteur NFC sécurisé. La partie "téléphonie" du système 5 comprend un circuit de bande de base 11 (circuit de téléphonie GSM standard) équipé d'une antenne UHF 11', ainsi qu'une carte SIM 20 ("Suscriber Identification Module"). Le circuit 11 est agencé sur une carte mère 10 et est relié à la carte SIM 20 par un bus de données série DB1, via un connecteur à contact 1120 fixé à la carte mère 10. Des éléments périphériques tels le clavier, le dispositif d'affichage et le boîtier du téléphone mobile ne sont pas représentés.

Le lecteur NFC comprend un circuit de lecture 12 monté sur la carte mère 10, et un circuit d'antenne 13 ayant des entrées A, B connectées au circuit de lecture 12. Le circuit d'antenne 13 comprend des condensateurs d'accord et une bobine d'antenne 13', et est accordé sur une fréquence porteuse Fc, par exemple 13,56 MHz suivant les normes ISO/IEC 14443 et ISO/IEC 15693 qui ne sont citées qu'à titre d'exemple dans la présente demande. Le circuit de lecture 12, le circuit de bande de base 11 et la carte SIM 20 sont alimentés électriquement par une tension continue interne vcci fournie par une batterie 15 du téléphone mobile.

Le mode actif du lecteur est mis en oeuvre par le circuit de lecture 12 et celui-ci est conçu pour appliquer un signal d'excitation de fréquence Fc au circuit d'antenne 13, moduler l'amplitude du signal d'excitation, détecter et démoduler un signal de modulation de charge, afin d'échanger des données avec un circuit intégré sans contact ou un lecteur NFC en mode passif. Par ailleurs, les ressources matérielles du circuit 11 (microprocesseur, mémoire programme...) sont utilisées pour gérer les applications en mode actif, grâce à des "applets" (programmes application) enregistrés dans ce circuit. Le circuit de lecture 12 est ainsi relié au circuit de bande de base 11 par un bus de données DB2, généralement de type I2C ("Inter Integrated Circuit") ou SPI ("Serial Peripheral Interface").

Le mode émulation sécurisé du lecteur NFC est mis en oeuvre en ajoutant à ces éléments un circuit d'interface passif 16 et un module de sécurité amovible 30 du type mentionné plus haut. Le circuit d'interface passif 16 est agencé sur la carte mère 10 et le module 30 est relié au circuit 16 au moyen d'un connecteur à contact 1030 solidaire de la carte mère.

Le circuit d'interface passif 16 est connecté au circuit d'antenne 13, en parallèle avec le circuit de lecture 12. En présence d'un champ magnétique alternatif FLD émis par un autre lecteur 100 (représenté schématiquement sur la figure 1), un signal d'antenne SA oscillant à la fréquence porteuse Fc apparaît aux bornes du circuit d'antenne 13, par couplage inductif entre la bobine d'antenne 13' et une bobine d'antenne 110 de l'autre lecteur. Le circuit 16 extrait alors du signal d'antenne une tension continue Vcce, un signal de données SDTr et un signal d'horloge primaire CK0 de fréquence Fc.

Le signal d'horloge CK0 et le signal de données SDTr sont envoyés au module 30 par l'intermédiaire de circuits amplificateurs TRIG1, TRIG2 (par exemple des triggers de Schmitt) qui mettent en forme ces signaux. De façon similaire, le module 30 fournit un signal de modulation de charge Slm qui est mis en forme par un circuit d'amplification TRIG3 avant de traverser le connecteur 1030 pour être appliqué à l'interrupteur de modulation de charge SWlm.

Enfin, une tension Vcc et une référence de potentiel électrique GND (masse) sont fournies au module 30 via le connecteur 1030. Plus particulièrement, la tension Vcc est fournie par un circuit de sélection recevant la tension extraite Vcce et la tension interne Vcci. Le circuit de sélection est par exemple un circuit à diodes D1, D2 fournissant la tension Vcci lorsque la tension Vcce est absente ou inférieure à Vcci (en négligeant la chute de tension dans les diodes D1, D2), sinon fournissant la tension Vcce

Le module 30 comprend un support 31, des plages de contact 32 sur lesquelles s'appuient des lames de contact 1031 du connecteur 1030, et un circuit intégré sécurisé 33 ("secure integrated circuit ") enchâssé dans le support 31 et ayant des contacts métallisés reliés électriquement aux plages de contact 32. Le circuit intégré 33 comprend un circuit RFCT, un microprocesseur MP, un plan mémoire MA et un registre d'identification IDREG. Le registre IDREG contient au moins un identificateur anticollision ID intervenant lors de l'ouverture d'un canal de communication RF. Le circuit RFCT comprend des circuits de décodage du signal de données entrant SDTr et de codage du signal de modulation de charge Slm sortant. Le plan mémoire MA contient des programmes pour l'ouverture d'un canal de communication RF en mode passif et des programmes pour la gestion d'une ou plusieurs applications. Le microprocesseur MP est ainsi capable d'ouvrir un canal de communication RF en mode passif en échangeant des trames RF avec le lecteur 100, et en assurant notamment la gestion des étapes d'initialisation et d'anticollision. Une fois le canal de communication ouvert, le microprocesseur est capable de gérer une application sécurisée en utilisant le canal RF comme moyen de transmission de données d'application. De façon similaire, le lecteur 100 comprend une couche logicielle assurant l'ouverture du canal de communication RF et une couche logicielle assurant la gestion de l'application. Le microprocesseur MP peut comprendre divers circuits périphériques, tels un circuit de cryptographie et un générateur de nombres aléatoires, pour lui permettre de gérer les aspects sécuritaires de l'application.

Pour que le lecteur NFC fonctionne de façon entièrement passive en mode émulation (le circuit de lecture 11 étant mis hors tension), la tension Vcce et le courant fournis par le circuit d'interface passif 16 doivent être suffisants pour alimenter électriquement les circuits TRIG1, TRIG2, TRIG3 et le module 30.

Toutefois, un tel lecteur NFC consomme un courant non négligeable, généralement de l'ordre de quelques milliampères. Un tel courant réduit considérablement la distance maximale de communication avec le lecteur 100, par rapport à celle offerte par une carte à puce sans contact (la puissance électrique récupérée par couplage inductif étant fonction du taux de couplage inductif qui est fonction de la distance de communication). Ainsi, lorsque la distance maximale de communication est imposée par le cahier des charges de l'application et est supérieure aux possibilités du lecteur, le mode émulation ne peut être implémenté qu'en puisant du courant dans la batterie 15 du dispositif.

Dans une variante de réalisation illustrée en figure 2, les liaisons d'horloge CK0 et de données SDTr sont remplacées par une liaison unique appelée "interface S2C", qui véhicule un signal composite S(SDTr, CK0) à la fois porteur de données et d'horloge et présentant une modulation par sauts de phase (modulation PSK ou "Phase Shift Keying"). Le signal composite est fourni par une porte XOR (OU EXCLUSIF) qui combine les signaux CK0, SDTr fournis par les circuits TRIG1, TRIG2. Une telle liaison unique est par exemple décrite dans le document intitulé "*S2C Interface for NFC, Adding a general purpose interface between NFC and Secure IC to Secure NFC, 21-01-2005, Survey V1.00*" (http://www.semiconductors.philips. com/acrobat/other/identification/S2C_survey_10.pdf).

Cette variante de réalisation ne résout toutefois pas le problème de surconsommation électrique, la tension Vcce et le courant fournis par le circuit d'interface passif 16 devant en outre alimenter électriquement la porte XOR.

Selon des constatations sur lesquelles la présente invention se fonde, il apparaît que les circuits amplificateurs TRIG1, TRIG2, TRIG3 consomment une grande partie de l'énergie électrique extraite du circuit d'antenne par le circuit d'interface passif 16, par exemple 30 à 50% de cette énergie. En effet, ces circuits doivent fournir une tension et un courant de sortie suffisants pour compenser les pertes électriques que les signaux CK0 et SDTr subissent en traversant le connecteur 1030, en raison de capacités parasites du connecteur apparaissant notamment entre les lames de contact 1031 du connecteur et les plages de contact 32 du module 30. De plus, la consommation électrique du circuit TRIG1 est très importante du fait que ce circuit commute à une fréquence élevée, à savoir 13,56 MHz.

La présente invention vise ainsi une architecture de lecteur NFC présentant, dans le mode émulation, une moindre consommation électrique.

Un objectif secondaire de la présente invention est de réaliser un lecteur NFC pouvant fonctionner de façon autonome en mode émulation tout en offrant une distance de communication satisfaisante.

Pour atteindre ces objectifs, une idée de la présente invention est de prévoir, dans la partie fixe du lecteur (soit la carte mère dans l'exemple ci-dessus), et de préférence à proximité immédiate du circuit d'interface passif, un circuit d'émulation capable d'assurer l'ouverture d'un canal de communication RF sans intervention du module de sécurité amovible, et qui, après avoir ouvert le canal de communication RF, transfère des données d'application au module de sécurité amovible.

Plus particulièrement, la présente invention prévoit un lecteur à couplage inductif comprenant un circuit d'interface passif pour moduler l'impédance d'un circuit d'antenne et extraire du circuit d'antenne un signal de données et un signal d'horloge RF, des moyens de connexion du lecteur à un module de sécurité amovible, un circuit d'émulation pour ouvrir un canal de communication RF avec un autre lecteur, transférer au module de sécurité amovible des données d'application reçues par l'intermédiaire du canal de communication RF, et envoyer dans le canal de communication RF des données d'application reçues du module de sécurité amovible, une liaison électrique non amovible reliant le circuit d'émulation au circuit d'interface passif, au moyen de laquelle le signal de données et le signal d'horloge RF sont fournis au circuit d'émulation, et un bus de données cadencé par un signal d'horloge de bus de fréquence inférieure à la fréquence du signal d'horloge RF, pour relier le circuit d'émulation au module de sécurité amovible.

Selon un mode de réalisation, le circuit d'interface passif et le circuit d'émulation sont agencés sur une même plaquette de semi-conducteur.

Selon un mode de réalisation, le circuit d'émulation comprend un registre d'identification contenant au moins un identificateur utilisé par le circuit d'émulation pour l'identification du lecteur pendant l'ouverture du canal de communication RF.

Selon un mode de réalisation, le circuit d'émulation comprend une mémoire tampon pour mémoriser des données d'application reçues via le canal de communication RF, avant de les transférer au module de sécurité amovible.

Selon un mode de réalisation, la mémoire tampon comprend au moins une pile FIFO comprenant une entrée recevant des données reçues via le canal de communication RF et une sortie reliée au bus de données pour envoyer ces données au module de sécurité amovible.

Selon un mode de réalisation, le circuit d'interface passif extrait du circuit d'antenne une tension d'alimentation continue, le circuit d'émulation et le module de sécurité amovible étant exclusivement alimentés par cette tension continue.

Selon un mode de réalisation, le bus de données est un bus ISO 7816.

Selon un mode de réalisation, le signal d'horloge de bus présente une fréquence au moins 25 fois inférieure à la fréquence du signal d'horloge RF.

Selon un mode de réalisation, le lecteur comprend un circuit de téléphonie GSM relié à une carte SIM via un bus de données.

Selon un mode de réalisation, la carte SIM et le module de sécurité amovible ne forment qu'un seul et même module.

Selon un mode de réalisation, le circuit d'émulation et le circuit de téléphonie GSM accèdent au module de sécurité amovible par un bus commun partagé au moyen d'un circuit de multiplexage de bus.

L'invention concerne également un dispositif portable de type PDA ou téléphone mobile, comprenant un lecteur selon l'invention.

L'invention concerne également un procédé pour mettre en oeuvre un mode de fonctionnement passif dans un lecteur à couplage inductif comprenant un circuit d'interface passif et un module de sécurité amovible, le circuit d'interface passif étant prévu pour moduler l'impédance d'un circuit d'antenne et extraire du circuit d'antenne un signal de données et un signal d'horloge RF, le module de sécurité amovible étant prévu pour gérer une application sécurisée, le procédé comprenant les étapes consistant à : prévoir un circuit d'émulation distinct du module de sécurité amovible et connecter le circuit d'émulation au circuit d'interface passif au moyen d'une liaison électrique non amovible au moyen de laquelle le signal de données et le signal d'horloge RF sont fournis au circuit d'émulation, ouvrir un canal de communication RF au moyen du circuit d'émulation, transférer au module de sécurité amovible des données d'application reçues par le circuit d'émulation par l'intermédiaire du canal de communication RF, et envoyer dans le canal de communication RF des données d'application reçues du module de sécurité amovible par le circuit d'émulation, et relier le circuit d'émulation au module de sécurité amovible au moyen d'un bus de données cadencé par un signal d'horloge de bus de fréquence inférieure à la fréquence du signal d'horloge RF.

Selon un mode de réalisation, le circuit d'interface passif et le circuit d'émulation sont agencés sur une même plaquette de semi-conducteur.

Selon un mode de réalisation, le procédé comprend une étape consistant à prévoir, dans le circuit d'émulation, un registre d'identification contenant au moins un identificateur utilisable par le circuit d'émulation pour l'identification du lecteur pendant l'ouverture du canal de communication RF.

Selon un mode de réalisation, le procédé comprend une étape consistant à prévoir, dans le circuit d'émulation, une mémoire tampon pour mémoriser des données d'application reçues via le canal de communication RF, avant de les transférer au module de sécurité amovible.

Selon un mode de réalisation, le procédé comprend une étape consistant à prévoir, dans le circuit d'émulation, au moins une pile FIFO comprenant une entrée recevant des données reçues via le canal de communication RF et une sortie reliée au bus de données pour envoyer ces données au module de sécurité amovible.

Selon un mode de réalisation, le procédé comprend une étape d'extraction d'une tension d'alimentation continue du circuit d'antenne et une étape d'application de cette tension au circuit d'émulation et au module de sécurité amovible en tant que tension d'alimentation exclusive.

Selon un mode de réalisation, le bus de données utilisé est un bus ISO 7816.

Selon un mode de réalisation, le signal d'horloge de bus présente une fréquence au moins 25 fois inférieure à la fréquence du signal d'horloge RF.

Selon un mode de réalisation, le lecteur est associé à un circuit de téléphonie GSM relié à une carte SIM, et la carte SIM et le module de sécurité amovible ne forment qu'un seul et même module.

Selon un mode de réalisation, le procédé comprend une étape consistant à prévoir un bus commun partagé par le circuit d'émulation et le circuit de téléphonie GSM pour accéder au module de sécurité amovible.

L'invention concerne également un lecteur à couplage inductif sous forme de circuit intégré sur microplaquette de semi-conducteur, comprenant un premier port pour connecter le circuit intégré à un circuit d'antenne et un deuxième port pour connecter le circuit intégré à un module de sécurité amovible, un circuit d'interface passif pour moduler l'impédance d'un circuit d'antenne et extraire du circuit d'antenne un signal de données et un signal d'horloge RF, un circuit d'émulation pour ouvrir un canal de communication RF avec un autre lecteur, puis transférer sur le deuxième port des données d'application reçues par l'intermédiaire du canal de communication RF, et envoyer dans le canal de communication RF des données d'application reçues via le deuxième port, et une liaison électrique non amovible reliant le circuit d'émulation au circuit d'interface passif, au moyen de laquelle le signal de données et le signal d'horloge RF sont fournis au circuit d'émulation.

Selon un mode de réalisation, le circuit d'émulation comprend un registre d'identification contenant au moins un identificateur utilisé par le circuit d'émulation pour l'identification du lecteur pendant l'ouverture du canal de communication RF.

Selon un mode de réalisation, le circuit d'émulation comprend une mémoire tampon pour mémoriser des données d'application reçues via le canal de communication RF, avant de les transférer sur le deuxième port.

Selon un mode de réalisation, la mémoire tampon comprend au moins une pile FIFO comprenant une entrée recevant des données reçues via le canal de communication RF et une sortie reliée au deuxième port pour envoyer ces données au module de sécurité amovible.

Selon un mode de réalisation, le circuit d'interface passif comprend un circuit pour extraire du circuit d'antenne une tension d'alimentation continue et dans lequel le circuit d'émulation et le module de sécurité amovible sont exclusivement alimentés par cette tension continue.

Selon un mode de réalisation, le lecteur comprend en outre un circuit de lecture de carte à puce sans contact, agencé pour appliquer sur le premier port un signal d'excitation du circuit d'antenne, et un troisième port relié au circuit de lecture, pour connecter le circuit intégré à un circuit externe de contrôle du circuit de lecture.

Selon un mode de réalisation, le lecteur comprend un circuit de gestion de bus relié au deuxième port, et un circuit pour extraire du signal d'horloge RF un signal d'horloge de bus de fréquence inférieure à la fréquence du signal d'horloge RF, et appliquer le signal d'horloge de bus au circuit de gestion de bus.

Selon un mode de réalisation, le circuit de gestion de bus assure une gestion de bus ISO 7816.

Selon un mode de réalisation, le circuit pour extraire du signal d'horloge RF un signal d'horloge de bus est agencé pour fournir un signal d'horloge de bus de fréquence au moins 25 fois inférieure à la fréquence du signal d'horloge RF.

Selon un mode de réalisation, le lecteur comprend un circuit de multiplexage de bus ayant une sortie reliée au deuxième port, une première entrée reliée au circuit de gestion de bus, et une seconde entrée reliée à un quatrième port du circuit intégré.

Ces objets, caractéristiques et avantages ainsi que d'autres de la présente invention seront exposés plus en détail dans la description suivante d'un exemple de réalisation de l'invention, faite à titre non limitatif en relation avec les figures jointes parmi lesquelles :
- la figure 1 précédemment décrite représente l'architecture d'un système électronique pour téléphone mobile incluant un lecteur NFC sécurisé classique,
- la figure 2 précédemment décrite représente un exemple de réalisation d'un circuit de liaison classique fournissant un signal composite au module de sécurité amovible de la figure 1,
- la figure 3 représente l'architecture d'un système électronique pour téléphone mobile incluant un lecteur NFC sécurisé comprenant un circuit d'émulation selon l'invention,
- la figure 4 représente un exemple de réalisation d'un circuit d'interface passif représenté sous forme de blocs en figure 3,
- la figure 5 illustre sous forme de blocs un exemple de réalisation du circuit d'émulation selon l'invention,
- la figure 6 est un organigramme illustrant le fonctionnement du circuit d'émulation,
- la figure 7 est un organigramme illustrant une variante dans le fonctionnement du circuit émulation, et
- la figure 8 représente une variante de réalisation du système de la figure 5.

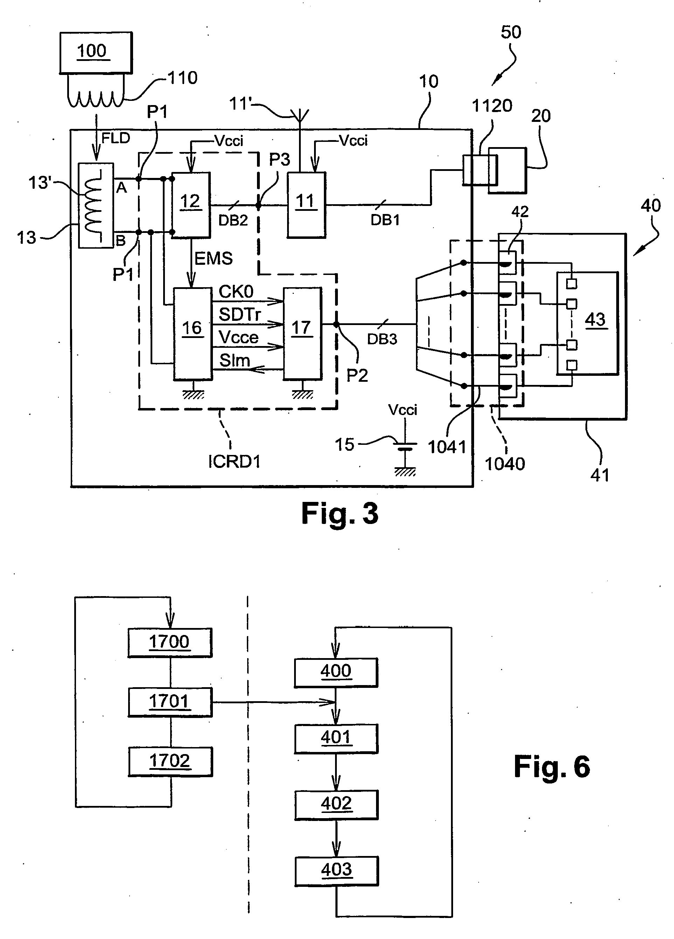

La figure 3 illustre schématiquement l'architecture d'un système électronique 50 destiné à un téléphone mobile et incorporant un lecteur NFC selon l'invention.

La partie téléphonie du système 50 comprend les éléments déjà décrits en relation avec la figure 1, désignés par les mêmes références, soit le circuit de bande de base 11, son antenne UHF 11' et la carte SIM 20. Comme précédemment, le circuit 11 est agencé sur une carte mère 10 et est relié à la carte SIM 20 par un bus de données DB1 via un connecteur à contact 1120. Des éléments périphériques tels le clavier, le dispositif d'affichage et le boîtier du téléphone mobile ne sont pas représentés.

Le lecteur NFC selon l'invention comprend, comme le lecteur de la figure 1, un circuit de lecture 12 monté sur la carte mère 10 et un circuit d'antenne 13 accordé sur une fréquence porteuse Fc, par exemple 13,56 MHz. Le circuit d'antenne 13, bien que représenté ici sur la carte mère 10, peut être agencé en tout autre logement du boîtier du téléphone. De façon classique, le circuit de lecture 12 applique un signal d'excitation au circuit d'antenne 13 et est contrôlé par le circuit de bande de base 11 par l'intermédiaire d'un bus de données DB2. Ces éléments sont alimentés électriquement par une tension continue interne Vcci fournie par une batterie 15 du téléphone mobile.

La mise en oeuvre du mode émulation du lecteur NFC est assurée par un circuit d'interface passif 16, décrit plus haut sous la même référence, un circuit d'émulation 17 selon l'invention, un module de sécurité amovible 40 comprenant un circuit intégré sécurisé 43 enchâssé dans un support. La liaison électrique entre le circuit 17 et le circuit intégré sécurisé 43 est assurée par un connecteur à contact 1040 comprenant des lames de contact 1041 reliées au circuit 17, s'appuyant sur les plages de contact 42 du support 41, reliées à des contacts métallisés du circuit intégré sécurisé 43.

Le circuit d'interface passif 16, agencé sur la carte mère, est connecté au circuit d'antenne 13 en parallèle avec le circuit de lecture 12. Comme représenté en figure 4 le circuit d'interface passif 16 comprend un interrupteur de modulation de charge SWlm, un interrupteur SWP, un circuit démodulateur DEMCT, un circuit d'extraction d'horloge CKCT et un circuit d'extraction d'alimentation électrique PSE. Le circuit PSE comprend par exemple un redresseur à diodes Pd (pont de diodes), une capacité de lissage Cs et un circuit régulateur REGCT.

L'interrupteur SWP est piloté par un signal EMS envoyé par le circuit de lecture 12 pour ouvrir l'interrupteur et déconnecte*r les circuits PSE, DEMCT, CKCT du circuit d'antenne 13 quand le circuit de lecture 12 applique le signal d'excitation au circuit d'antenne. L'interrupteur est de préférence du type normalement fermé et est ainsi dans l'état passant en l'absence du signal EMS, lorsque le circuit de lecture 12 est hors tension.

Lorsqu'un champ magnétique alternatif FLD émis par un lecteur 100 fait apparaître un signal d'antenne alternatif SA de fréquence Fc dans le circuit d'antenne 13, le circuit PSE fournit une tension continue Vcce, le circuit DEMCT supprime la porteuse Fc incluse dans le signal d'antenne SA et fournit un signal de données SDTr représentatif de l'enveloppe du signal d'antenne (données brutes démodulées mais non décodées), et le circuit CKCT fournit un signal d'horloge primaire CK0 de fréquence Fc.

En se référant de nouveau à la figure 3; il apparaît que les signaux d'horloge CK0 et de données SDTr ne sont pas envoyés directement au module 40 mais sont interceptés par le circuit d'émulation 17 pour être traités localement, contrairement à l'art antérieur. De même, le signal de modulation de charge Slm n'est pas envoyé par le module 40 mais est émis par le circuit d'émulation 17. De plus, le circuit d'émulation 17 est relié au circuit d'interface 16 par des conducteurs fixes formant une liaison électrique permanente non amovible.

De préférence, les circuits 16 et 17 sont réalisés sous la forme d'un circuit intégré ICRD1 réalisé sur une microplaquette de semi-conducteur, de sorte que les conducteurs de liaison sont de faible longueur. Ainsi, aucun connecteur ne s'interpose entre les circuits 16 et 17, les signaux CK0, SDTr transitent entre les circuits 16 et 17 le long de lignes conductrices de longueur réduite dont les impédances sont parfaitement maîtrisées, et les pertes capacitives sont faibles. Aucun circuit de puissance n'est ainsi nécessaire pour transférer les signaux SDTr et Ck0. Accessoirement, le circuit de lecture 12 est également intégré sur cette plaquette de semi-conducteur, qui forme alors un lecteur NFC sous forme de circuit intégré pouvant être aisément agencé dans un téléphone mobile ou tout autre appareil.

Lorsque le lecteur 100 émet une commande d'interrogation ou une commande d'inventaire pour sonder son périmètre de communication, le circuit d'émulation 17 est agencé pour répondre à la demande et assurer les étapes d'initialisation d'une communication sans contact, y compris les étapes anticollision, en émulant le fonctionnement ou "comportement" d'un circuit intégré sans contact (circuit PICC au sens de ISO/IEC 14443) jusqu'à création d'un canal de communication RF avec le lecteur.100. Le module 40 se voit ainsi déchargé de la gestion du protocole RF et s'occupe seulement de la gestion de la couche application (protocole privé).

Lorsque le canal de communication RF est ouvert, le circuit d'émulation 17 se place dans un état transparent vis-à-vis de blocs de données d'application qui circulent dans le canal de communication RF : il répercute au module 40 des données d'application envoyées par le lecteur 100 ou retransmet au lecteur 100 des données d'application envoyées par le module 40.

Par ailleurs, selon un aspect optionnel mais avantageux de l'invention, les données d'application sont envoyées au module 40 par l'intermédiaire d'un bus de données série DB3 de type maître/esclave qui traverse le connecteur 1040 et est cadencé par un signal d'horloge de fréquence inférieure à la fréquence Fc du signal d'horloge primaire CK0. De ce fait, le bus DB3 est contrôlé par des éléments électroniques qui ne commutent pas à une fréquence RF et consomment ainsi peu de courant.

Cette architecture de lecteur NFC avec éclatement de la fonction de gestion du canal RF (circuit d'émulation 17) et de la fonction de gestion de l'application (module 40), et utilisation d'un bus de données non-RF, offre un avantage très net en ce qui concerne la consommation électrique du lecteur NFC, par rapport à l'architecture de lecteur représentée en figure 1.

Le lecteur NFC, s'il est réalisé sous forme de circuit intégré ICRD1 comme représenté par des traits pointillés sur la figure 3, comprend ainsi un premier port P1 pour connecter le circuit intégré au circuit d'antenne 13, un second port P2 pour connecter le bus DB3 au circuit intégré, et un troisième port P3 pour connecter le bus DB2 au circuit intégré. Une partie du circuit d'antenne, notamment les condensateurs d'accord, peut éventuellement être intégrée sur la microplaquette de semi-conducteur (selon la technologie employée). Dans ce cas, le "circuit d'antenne" à connecter au circuit intégré peut ne comprendre que la bobine d'antenne, ou la bobine d'antenne et d'autres composants qui n'ont pas été intégrés sur la microplaquette de semi-conducteur.

La tension continue Vcce fournie par le circuit d'interface 16 est ici directement appliquée au circuit émulation 17 et assure exclusivement l'alimentation électrique de ce dernier. Cette tension Vcce est également envoyée au module 40 via le bus DB3 et assure également l'alimentation électrique du module 40. Dans ces conditions, la partie du lecteur NFC assurant le mode émulation, à savoir le circuit d'émulation 17 et le module 40 (le circuit d'interface passif 16 ne nécessitant pas d'être alimenté) est auto-alimentée par le champ magnétique extérieur FLD.

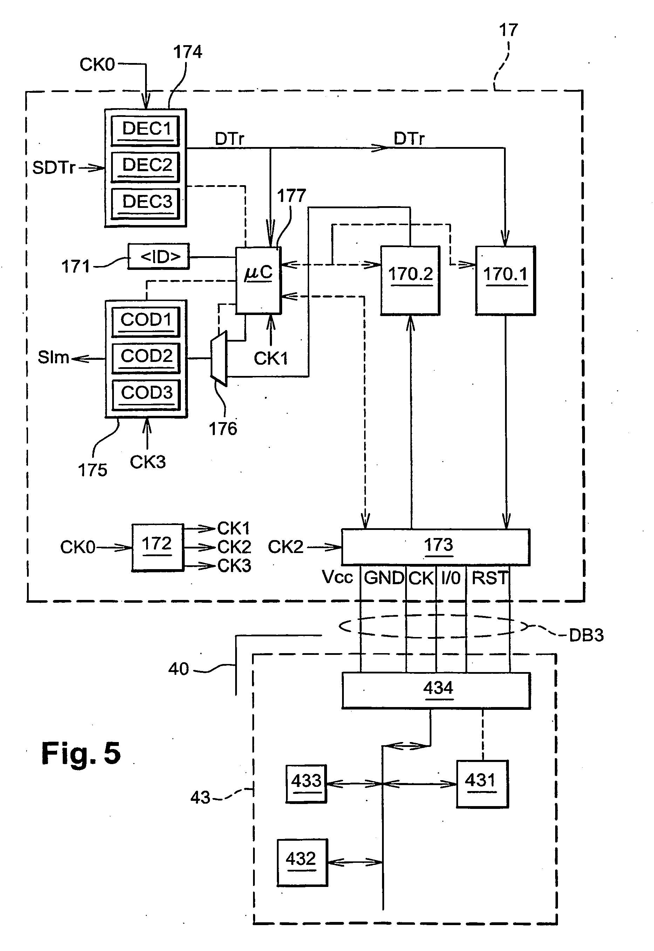

Un exemple de réalisation du circuit d'émulation 17 est représenté sur la figure 5, ainsi qu'un exemple d'architecture du circuit intégré sécurisé 43.

Le circuit intégré sécurisé 43 comprend un microprocesseur 431, un plan mémoire 432, un circuit périphérique de gestion de la sécurité 433, incluant par exemple des circuits de cryptographie et/ou des circuits de protection de mots de passe, et un circuit de gestion du bus 434 fonctionnant en mode esclave. Le plan mémoire 432 comprend des programmes de gestion d'au moins une application, et contrairement à l'art antérieur, ne comprend pas de programme d'initialisation d'une communication RF. De même, contrairement à l'art antérieur, le circuit intégré sécurisé 43 ne comprend pas d'identificateur anticollision pour protocole de communication RF, ni de circuit de codage et de décodage pour ouvrir un canal de communication RF.

Le circuit d'émulation 17 comprend les principaux éléments suivants :
- deux piles FIFO 170-1, 170-2 (piles "first in first out") formant un tampon de données 170,
- un registre d'identification 171,
- un générateur d'horloge 172,
- une unité de gestion de bus 173,
- un circuit de décodage 174, et
- un circuit de codage 175.

Ces éléments sont contrôlés par une unité de contrôle 177 (UC) au moyen de divers signaux de contrôle représentés schématiquement par des liaisons en traits pointillés. Ces éléments étant d'une structure complexe et leur réalisation étant en soi à la portée de l'homme de l'art, seule leur fonction sera décrite dans ce qui suit. On suppose ici que le circuit d'émulation 17 est un circuit multiprotocole compatible avec les protocoles ISO/IEC 14443 type A, ISO/IEC 14443 type B et ISO/IEC 15693. L'homme de l'art pourra bien entendu prévoir une compatibilité avec d'autres protocoles, voire avec un seul protocole.

### Registre d'identification 171

Le registre 171 contient au moins un identificateur anticollision ID qui forme l'identificateur unique "UID" selon ISO/IEC 14443-3/A ou ISO/IEC 15693 (nombre fixe diversifié) et l'identificateur "PUPI" (identificateur pseudo-unique) selon ISO/IEC 14443-3/B. S'il est souhaité de prévoir un identifiant "PUPI" différent de l'UID et généré de manière dynamique, au lieu de prévoir un nombre fixe diversifié, le registre 171 peut comprendre une partie non volatile (ROM) dans laquelle l'UID est enregistré au moment de la mise en service du circuit (étape de personnalisation) et une partie volatile reliée à des moyens pour générer un "PUPI" aléatoire ou pseudo-aléatoire.

### Générateur d'horloge 172

Le générateur d'horloge 172 est un diviseur de fréquence qui reçoit le signal d'horloge primaire CK0 et fournit des signaux CK1, CK2, CK3 de fréquence inférieure à la fréquence Fc. Le signal CK1 est appliqué à l'unité de contrôle 177 en tant que signal d'horloge de séquencement. Le signal CK2 est appliqué à l'unité de gestion de bus 173 en tant que signal d'horloge de bus, et le signal CK3 est appliqué au circuit de codage 175 en tant que signal de sous-porteuse de fréquence Fsc.

### Circuit de décodage 174 et circuit de codage 175

Les circuits de décodage 174 et de codage 175 sont des circuits classiques du type utilisé dans les circuits intégrés sans contact. Le circuit d'émulation 17 ayant sensiblement la même fonction qu'un circuit intégré sans contact en ce qui concerne la connexion RF, les interfaces de communication de bas niveau tels les codeurs et décodeurs ne nécessitent pas de modification particulière par rapport à l'état de la technique.

Le circuit de décodage 174 comprend trois décodeurs en parallèle DEC1, DEC2, DEC3, chacun recevant le signal de données SDTr et effectuant chacun une opération de décodage conforme à l'une des normes précitées, le décodeur DEC1 assurant un décodage selon ISO/IEC 14443-A, le décodeur DEC2 assurant un décodage selon ISO/IEC 14443-B et le décoder DEC3 assurant un décodage selon ISO/IEC 15693. Lorsque le signal de données SDTr est reçu, la détermination du décodeur à utiliser est effectuée en sélectionnant à la sortie du circuit de décodage 174 la sortie du décodeur ne fournissant pas un signal d'erreur. Le décodeur fournit un signal de données entrant DTr issu du signal de données codé SDTr. Chaque décodeur comprend classiquement un étage de décodage de bit, un étage de décodage de mot, et un étage de décodage de trame.

Pour fixer les idées, il sera rappelé que la norme ISO/IEC 15693 utilisée dans les applications dites "long range" (grande distance de communication) prévoit notamment un codage du bit par paire de bits et par position d'impulsion, une impulsion étant formée par des trous de champ magnétique pouvant occuper quatre positions dans des segments temporels. Ce protocole offre un débit de données assez faible de l'ordre de 26 kbit/s mais une distance de communication élevée de plusieurs dizaines de centimètres, pouvant atteindre le mètre. Par ailleurs, ISO/IEC 14443-A prévoit un codage du bit de type Miller Modifié et une modulation de l'amplitude du champ magnétique à 100% (modulation ASK), et ISO/IEC 14443-B prévoit un codage du bit de type NRZ et une modulation de l'amplitude du champ magnétique à 10%, chacune de ces options offrant un débit de données plus élevé de 106 kbit/s, 212 kbit/s ou 424 kbit/s mais une distance de communication plus faible.

De façon similaire, le circuit de codage 175 comprend trois codeurs en parallèle COD1, COD2, COD3, l'un d'entre eux étant activé par l'unité de contrôle 177 en fonction du type de codage des données entrantes, identifié par le décodeur 174. Les codeurs reçoivent des données sélectionnées par un multiplexeur 176, et fournissent le signal de modulation de charge Slm qui est appliqué à l'interrupteur SWlm du circuit d'interface 16 (fig. 4). Chaque codeur est prévu pour effectuer un codage des données sortantes conforme à l'une des normes précitées et comprend un étage de codage de bit, un étage de codage de mot et un étage de codage de trame.

Il sera également rappelé que la norme ISO/IEC 14443-A prévoit un codage du bit par modulation de charge en utilisant une sous-porteuse de fréquence Fc/16 et un codage Manchester, tandis que la norme ISO/IEC 14443-B prévoit un codage du bit de type BPSK (codage par saut de phase) sans retour à zéro (NRZ), également au moyen d'une sous-porteuse de fréquence Fc/16. Cette sous-porteuse est ici le signal CK3, qui est fournit au circuit de codage 175 par le générateur d'horloge 172. Par ailleurs, la norme ISO/IEC 15693 prévoit un premier mode de modulation de charge utilisant une sous-porteuse de fréquence Fc/32 (423 KHz) et un second mode de modulation de charge utilisant deux sous-porteuses de fréquences respectives Fc/32 et Fc/28.

### Unité de gestion de bus 173

L'unité de gestion de bus 173 assure la gestion du bus DB3 en tant que dispositif maître. Elle reçoit en entrée des données présentes dans la pile 170-1 et les envoie sur le bus DB3 sur décision de l'unité de contrôle 177. De l'autre côté du bus, dans le circuit intégré sécurisé 43, l'unité de gestion de bus 434 assure la réception des données. L'unité 173 assure également le transfert des données que le circuit intégré sécurisé 43 envoie au lecteur 100 pendant une session application. Ces données sont appliquées par l'unité 173 à l'entrée de la pile FIFO 170-2. Dans l'exemple de réalisation représenté sur la figure 5, le bus DB3 est de type ISO/IEC 7816 et comprend un fil Vcc, un fil GND (fil de masse), un fil CK (fil d'horloge), un fil I/O (fil de données bidirectionnel) et un fil RST ("Reset").

L'unité 173 applique sur le fil Vcc la tension Vcce fournie par le circuit d'interface passif 16, et la tension Vcce est utilisée par le circuit intégré 43 en tant que tension d'alimentation, comme indiqué plus haut. Par ailleurs, l'unité 173 applique sur le fil CK le signal d'horloge CK2 en tant que signal d'horloge de bus, pour cadencer le transfert de données.

Selon un aspect optionnel mais avantageux de l'invention, la fréquence du signal d'horloge CK2 est ajustée par le générateur d'horloge 172 en fonction du protocole mis en jeu par le canal de communication RF. Ainsi, si le canal de communication RF a été ouvert suivant le protocole ISO/IEC 15693, le signal CK2 est ajusté au voisinage des 26 KHz correspondant aux 26 kbit/s offerts par le canal de communication RF. Si le canal de communication RF a été ouvert suivant le protocole ISO/IEC 14443 type A ou B, le signal CK2 est ajusté au voisinage des 106 KHz correspondant aux 106 kbit/s offerts par le canal de communication RF.

### Unité de contrôle 177 et piles FIFO 170-1, 170-2

L'unité de contrôle 177 constitue le coeur du circuit d'émulation 17, les éléments périphériques qui viennent d'être décrits étant classiques au plan de la fonction, comme souligné plus haut.

Plutôt qu'un microprocesseur, l'unité de contrôle est de préférence une machine d'état à nombre d'états fini ("Finite State Machine") réalisée en logique câblée, afin que le circuit d'émulation présente une faible consommation électrique. L'unité de contrôle étant dédiée à l'établissement d'un canal de communication RF, les états et les conditions de transition entre ces états sont définis par les normes précitées (Cf. par exemple 14443-3/A figure 6 "diagramme d'état de carte de proximité de type A" et 14443-3/B figure 19 "exemple d'organigramme de transition d'état d'une carte de proximité").

L'unité de contrôle 177 est configurée pour conduire les étapes suivantes, illustrées par un organigramme en figure 6 :
**étape 1700** : intercepter en intégralité le flux de données entrant DTr (sortie du décodeur 174) tant que celui-ci se rapporte à l'initialisation d'une communication avec le lecteur 100, traiter les commandes d'anticollision envoyées par le lecteur 100, et générer les réponses à de telles commandes,
**étape 1701** : lorsque le canal de communication RF est ouvert, ouvrir un canal de communication interne avec le module 40, via le bus DB3, au moyen de l'unité de gestion de bus 173, envoyer dans le canal de communication interne, de façon transparente, les données d'application entrantes reçues via le canal de communication RF, et envoyer dans le canal de communication RF, à destination du lecteur 100, les données d'application sortantes reçues du module 40 via le canal de communication interne.
**étape 1702** : détecter une commande de fin de communication (par exemple une commande de désélection) et cesser d'envoyer des données.

La fonction dévolue à l'unité de contrôle 177 est mise en oeuvre ici en utilisant la pile FIFO 170-1 pour bloquer ou au contraire transmettre dans le canal de communication interne les données entrantes, et en utilisant la pile FIFO 170-2 et le multiplexeur 176 pour envoyer dans le canal de communication RF les données d'application reçues via le canal de communication interne. A cet effet, la sortie du circuit de décodage 174 est reliée à la fois à l'entrée de la pile FIFO 170-1 et à l'entrée de l'unité de contrôle 177. La sortie de la pile FIFO 170-2 est reliée à une première entrée du multiplexeur 176 et l'unité de contrôle 177 est reliée à une seconde entrée du multiplexeur. Le multiplexeur est piloté par l'unité de contrôle 177 et permet d'appliquer à l'entrée du circuit de codage 175 des données de contrôle que l'unité 177 émet (réponses à des commandes d'initialisation et d'anticollision du canal de communication RF) ou d'appliquer à l'entrée du circuit de codage 175 des données d'application reçues du module 40 et stockées dans la pile FIFO 170-2.

En ce qui concerne les données entrantes, l'unité de contrôle 177 est configurée ici de manière à effectuer les actions suivantes :
1) analyser toutes les données entrantes, bloquer la pile FIFO 170-1 et inhiber le bus DB3 tant que le canal de communication RF n'est pas ouvert, décoder les commandes d'initialisation et d'anticollision contenues dans ces données, exécuter les commandes en envoyant des réponses via le circuit de codage 175,
2) lorsque le canal de communication est ouvert, bloquer la pile FIFO 170-1 pendant que des données de contrôle sont reçues, activer la pile FIFO 170-1 lorsque des données d'application sont reçues, et activer le bus DB3 pour que les données soient envoyées au module 40.

En ce qui concerne les données d'application sortantes, émises par le module 40, l'unité de contrôle 177 est configurée ici de manière à effectuer les actions suivantes :
1) placer le bus DB3 en configuration de réception, activer la pile 170-2 pour enregistrer les données d'application,
2) pendant que les données d'application sont reçues dans la pile 170-2, générer des données de début de trame (ou de bloc) devant précéder les données d'application et les appliquer au circuit de codage 175, puis appliquer au circuit de codage les données d'application présentes dans la pile 170-2, puis, si nécessaire, générer des données de fin de trame (ou de bloc) et les appliquer au circuit de codage.

Des étapes de vérification de codes de détection d'erreur (CRC) présents dans les données entrantes, de production et d'insertion de codes de détection d'erreur dans les données sortantes, sont de préférence réalisées par les étages de décodage et de codage de trame du circuit de décodage 174 et du circuit de codage 175, respectivement. De même, des étapes de détection ou d'insertion de bits de début de mot et de bits de fin de mot sont de préférence réalisées par les étages de décodage de mot et de codage de mot du circuit de décodage 174 et du circuit de codage 175, respectivement.

En résumé, l'unité de contrôle 177 différentie les commandes reçues visant l'ouverture du canal de communication RF et les blocs de données d'application, et décide si elle traite ces données ou si elle les retransmet au module 40.

De son côté, le circuit intégré sécurisé 43 assure le contrôle de la couche application à partir des données d'application transmises par l'unité de contrôle, en conduisant les étapes suivantes, également illustrées en figure 6 :
**étape 400** : après mise sous tension du circuit intégré 43 par la tension Vcce extraite du champ magnétique externe, attente d'une première commande de la couche d'application,
**étape 401** : réception et traitement de commandes d'application visant à établir une transaction. Ces commandes peuvent comprendre tout type de commande de sécurisation utilisée dans les applications connues développées initialement pour les cartes à contact, le canal de communication RF étant transparent du point de vue de l'application, et notamment des commandes d'authentification comprenant des mots aléatoires, dont les réponses mettent en jeu un algorithme de cryptographie propre au circuit intégré sécurisé 43.
**étape 402** : traitement de la transaction. Il peut s'agir par exemple d'une transaction visant à débiter un compteur d'unité présent dans le plan mémoire 432 du circuit intégré, en vue de permettre à l'usager d'accéder à un service (transport ou autre),
**étape 403** : clôture de la transaction au moyen d'une commande appropriée, spécifique à la couche application, et retour à l'étape d'attente 400 si le circuit intégré 43 est encore alimenté électriquement.

A l'étape 1701, quand le canal de communication RF est ouvert, l'unité de contrôle 177 peut continuer de gérer les parties du flux de données permettant de contrôler le flux des données d'application. Cela est le cas si, conformément au modèle OSI du CCITT (Interconnexion des Systèmes Ouverts du Comité Consultatif International des Télégraphes et Téléphones), la couche session est combinée avec la couche de liaison de données, car l'échange de blocs de données dans un sens ou dans l'autre pour le transfert des commandes de la couche application nécessite alors au moins le traitement de champs de contrôle. Ceci apparaîtra clairement plus loin en décrivant un exemple de séquence d'ouverture d'une session d'application selon ISO/IEC 14443-4/B, au cours de laquelle des champs de prologue et d'épilogue restent sous le contrôle de l'unité de contrôle 177.

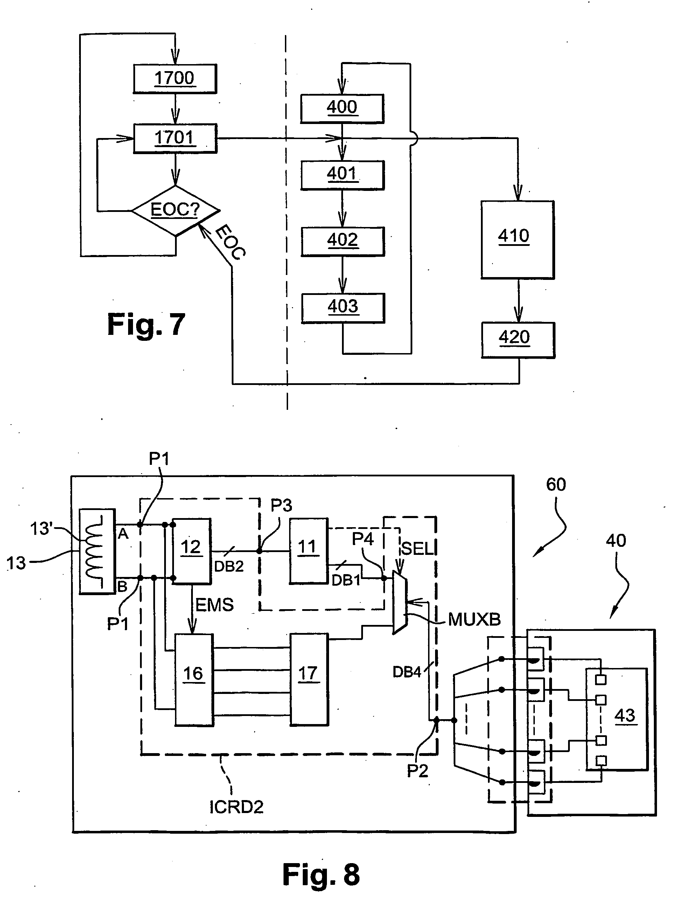

Dans une variante illustrée en figure 7, le contrôle de la couche liaison de données après ouverture du canal de communication RF, soit la supervision du canal de communication RF, est confié au module de sécurité amovible 40. Ainsi, en parallèle avec les étapes 401, 402, 403 le circuit intégré sécurisé 43 traite des données n'appartenant pas à la couche application et permettant de gérer le canal de communication RF. Dans ce cas, le circuit d'émulation 17 est entièrement transparent au cours de l'étape 1701 et transmet toutes les données reçues (hormis des codes d'erreur CRC si leur vérification est faite par le circuit de décodage, comme indiqué plus haut). Dans ce cas, une commande de fin de communication RF est décodée par le circuit intégré sécurisé 43 au cours d'une étape 420. Le circuit intégré 43 envoie ensuite à l'unité de contrôle 177 un signal de fin de session EOS, qui conduit l'unité de contrôle à revenir à l'étape 1700.

Quelle que soit l'option retenue, l'unité de contrôle 177 décode et analyse à la volée les commandes suivantes présentes dans les trames jusqu'à l'ouverture du canal de communication RF. Dans le présent exemple de réalisation où le circuit d'émulation est compatible ISO/IEC 14443 et ISO/IEC 15693, ces commandes sont les suivantes :

| **Commandes** **ISO/IEC 14443-A** | **Commandes** **ISO/IEC 14443-B** | **Commandes** **ISO/IEC 15693** |
|---|---|---|
| REQA | REQB | INVENTORY |
| WAKEUP | SLOTMARKER | STAYQUIET |
| ANTICOLL | ATTRIB | |
| SELECT | HALTB | |
| HALTA | | |

On décrira maintenant à titre d'exemple une séquence d'initialisation d'un canal de communication RF selon la norme ISO/IEC 14443/B. Les signes de références édictés par la norme (commandes et champs dans les commandes) sont mentionnés entre guillemets pour les distinguer des signes de références propres à la présente demande.

### Initialisation du canal de communication RF et anticollision

**Etape A** : l'unité de contrôle 177 reçoit une commande "REQB" de 5 octets comprenant un code "APf" (préfixe anticollision), un code "AFI" (identification de famille d'application), un code "PARAM" (nombre de tranches de réponse). A noter que les deux octets "CRC-B" du champ de détection d'erreur sont traités par le décodeur 174, tant pour cette commande que les commandes suivantes. Ils ne seront donc plus mentionnés dans ce qui suit, ainsi que les octets "CRC-B" insérés dans les réponses.
**Etape B** : On suppose ici, à titre simplificateur, que l'unité de contrôle calicule aléatoirement une position de réponse égale à 0 (réponse immédiate) sur l'échelle de réponse spécifiée par le code "PARAM", ou qu'elle est paramétrée en mode probabiliste et non pseudo-déterministe (les deux options étant prévues par ISO/IEC 14443) et qu'elle décide, au terme d'un processus de choix aléatoire, de répondre à cette commande. Ainsi, au cours de l'étape B, l'unité de contrôle renvoie une réponse "ATQB" comprenant l'octet "50" (notation hexadécimale), quatre octets formant le "PUPI" (lus dans le registre d'identification 171 et pouvant avoir été générés aléatoirement), quatre octets de données d'application (non utilisés ici, le canal de communication interne n'étant pas encore ouvert), et trois octets de données de protocole.
**Etape C** : l'unité de contrôle reçoit la commande "ATTRIB" comprenant un octet égal à "1D", les quatre octets du "PUPI", quatre octets de paramétrage, et N octets de couche supérieure. Si N est différent de 0, le champ "octets de couche supérieure" concerne le module 40 et lui est envoyé, via le bus DB3, après avoir ouvert le canal de communication interne. Les octets de paramétrage définissent les délais de réponse aux commandes, la suppression ou non des débuts et fins de trame "SOF" et "EOF" (cette information étant communiquée aux circuits de décodage 174 et de codage 175), la taille de trame maximale, et comprennent aussi un identificateur de carte CID attribué à l'unité de contrôle pour la session de communication RF dont l'ouverture est effective lorsque la commande "ATTRIB" est reçue.
   Si le lecteur 100 envoie des commandes "SlotMarker" entre les étapes B et C ou après l'étape C, pour déterminer si d'autres entités se trouvent dans son périmètre d'interrogation, l'unité de contrôle ne répond pas à de telles commandes après avoir envoyé le message "ATQB".
**Etape D** : l'unité de contrôle répond à la commande "ATTRIB" en envoyant un octet contenant le CID (identification de carte), et N octets de couche supérieure (si ceux-ci ont été fournis par le module 40 via le canal due communication interne et sont présents dans la pile 170-2).

Après avoir répondu à la commande "ATTRIB", l'unité de contrôle ne répond qu'aux commandes application définies dans ISO/IEC 14443-4, qui incluent le CID unique, et n'assure que la supervision du canal de communication RF en transmettant les blocs de données d'application au module 40, et en envoyant dans le canal RF les données d'application reçues du module amovible 40. Toutefois, une commande "HLTB" (un octet égal à "50", quatre octets de "PUPI") reçue avant la commande "ATTRIB" remet l'unité de contrôle dans un état initial.

### Supervision du canal de communication RF

On suppose ici que la supervision du canal de communication est assurée par l'unité de contrôle 177, conformément à l'organigramme de la figure 6. La supervision du canal de communication RF comprend ici le traitement par l'unité de contrôle du champ prologue (comprenant le "CID" attribué par la commande "ATTRIB") des blocs "I" destinés à acheminer les données d'application. Le champ épilogue ou champ "EDC" des blocs, qui contient deux octets "CRC-B", est comme précédemment généré par le circuit de décodage (blocs entrants) ou le circuit de codage (blocs sortants). Le champ information "INF" qui permet d'acheminer les données d'application dans les blocs "I", ou des informations de contrôle dans les blocs "S", est transmis au module 40 seulement s'il est présent dans un bloc "I". Optionnellement, les blocs "S" peuvent être utilisés par le circuit d'émulation 173 pour échanger des données de contrôle avec le lecteur 100, ainsi que les blocs "R" qui permettent d'acheminer des accusés de réception positifs ou négatifs et ne contiennent pas de champ "INF".

L'unité de contrôle ferme le canal de communication RF sur réception de la commande "DESELECT" qui ne contient pas de champ "INF". La commande "DESELECT" est codée comme un bloc de protocole "S". Elle est constituée d'un bloc de demande "S(DESELECT)" envoyé par le lecteur 100 et d'une réponse "S(DESELECT)" envoyé comme accusé de réception par l'unité de contrôle.

Dans la variante illustrée par l'organigramme de la figure 7, le traitement du champ prologue des blocs "I" est assuré par le module 40, qui a préalablement reçu de l'unité de contrôle 177 le "CID" attribué par le lecteur 100.

A la lumière de l'exemple qui vient d'être décrit, il apparaît que les piles FIFO ne sont prévues que pour des raisons de synchronisation du flux de données d'application entrant et du flux de données d'application sortant. L'homme de l'art notera ainsi qu'une suppression des piles FIFO, notamment la pile 170-1, est envisageable si les questions de synchronisation des trames sont maîtrisées pour chaque protocole de communication utilisé. De même, les piles FIFO peuvent être remplacées par tout autre type de mémoire tampon, en prévoyant une gestion de mémoire tampon appropriée.

La figure 8 illustre schématiquement une variante 60 du système 50 représenté en figure 4. Le système 60 se distingue du système 50 par le fait que la carte SIM 20 est supprimée et que le module 40 est utilisé à la fois en tant que module de sécurisation des applications conduites par l'intermédiaire du canal de communication RF, comme précédemment décrit, et en tant que carte SIM pour sécuriser les applications de téléphonie.

A cet effet, le bus DB1 du circuit de bande de base 11 et le bus DB3 du circuit d'émulation 17 sont de même type et sont par exemple des bus ISO/IEC 7816. L'extrémité du bus DB1 est connectée à une première entrée d'un multiplexeur de bus MUXB (entrée à plusieurs fils) et l'extrémité du bus DB3 est connectée à une seconde entrée du multiplexeur MUXB. La sortie du multiplexeur MUXB est reliée par un bus DB4 au module 40 (soit à l'unité de gestion de bus 434 du circuit intégré sécurisé 43, Cf. fig. 5). Le multiplexeur MUXB est contrôlé par un signal SEL qui est par exemple fourni par le circuit de bande de base 11. Le multiplexeur relie le bus DB3 au module 40 lorsque le signal SEL est par exemple égal à 1, et relie le bus DB1 au module 40 lorsque le signal SEL est égal à 0. La priorité est donnée ici au circuit de bande de base 11, qui accède prioritairement au module 40 en tant que carte SIM lorsqu'une application de téléphonie doit être conduite et libère le bus DB4 dans le cas contraire pour permettre au module 40 de répondre à une demande d'ouverture de session d'application reçue sous forme de données d'application envoyées par le circuit d'émulation 17. Toutefois une gestion plus complexe des priorités d'accès au module 40 peut être prévue en prévoyant un échange de signaux de contrôle entre le circuit de bande de base 11 et le circuit d'émulation 17.

Cette variante du lecteur NFC selon l'invention peut comme précédemment être réalisée sous la forme d'un circuit intégré ICRD2, comme représenté sur la figure 8 par des traits pointillés. Le circuit intégré ICRD2 comprend ainsi le port P1 pour connecter le circuit intégré au circuit d'antenne 13, le port P2 pour connecter le bus DB4 à la sortie du multiplexeur MUXB (le bus DB3 étant relié ici en interne à l'entrée du multiplexeur MUXB, qui est intégré sur la microplaquette), le port P3 pour connecter le bus DB2 au circuit intégré, et un quatrième port P4 pour connecter le bus DB1 à l'entrée du multiplexeur MUXB.

Il apparaîtra clairement à l'homme de l'art que la présente invention est susceptible de diverses variantes de réalisation et application. Notamment, le circuit d'émulation 17 peut comprend d'autres interfaces de bus (unités de gestion de bus) pour être connecté à des circuits de gestion d'application agencés sur la carte mère. De tels circuits de gestion d'application peuvent notamment être prévus pour des applications non sécurisées ne nécessitant pas l'intervention du module 40. Par ailleurs, bien que l'on ait décrit un mode de réalisation d'un lecteur NFC selon l'invention dans un système pour téléphone mobile, il va de soi que la présente invention n'est pas limitée à cet exemple. Ainsi, un lecteur NFC selon l'invention, dépourvu de circuit de téléphonie, peut aussi être réalisé. Le lecteur se présente par exemple sous la forme d'un dispositif portatif de faible encombrement, comprenant un logement de réception du module de sécurité amovible 40, un écran d'affichage et un clavier. Un tel dispositif permet, en mode actif, de lire des étiquettes électroniques sans contact, des badges électroniques sans contact, des cartes de visite électroniques sans contact. En mode émulation, et même si la batterie interne du dispositif est déchargée, le dispositif demeure utilisable en tant que carte à puce sans contact pour accéder à des services, en tant que porte-monnaie électronique, que moyen de contrôle d'accès (ouverture de portes par exemple ou clef de contact sans contact), etc..

Par ailleurs, le circuit 16 et le module 40 (fig. 3, 8) peuvent aussi être alimenté électriquement avec une tension composite telle que décrite en relation avec la figure 1, devenant égale à la tension interne Vcci lorsque la distance de communication devient trop importante pour que la tension Vcce assure seule l'alimentation de ces éléments. L'invention apporte toutefois, dans ces conditions, l'avantage d'une économie d'énergie. De plus, la tension Vcce peut être envoyée dans un circuit de dérivation pour charger un accumulateur auxiliaire qui sera ensuite utilisé en tant que source d'alimentation locale.

## Revendications

1. Lecteur à couplage inductif (50, 60) comprenant un circuit d'interface passif (16) pour moduler l'impédance d'un circuit d'antenne (13) et extraire du circuit d'antenne un signal de données (SDTr) et un signal d'horloge RF (CK0), et des moyens (173, DB3, 1030) de connexion du lecteur à un module de sécurité amovible (40, 43),
**caractérisé en ce qu'**il comprend en outre :
- un circuit d'émulation (17) pour ouvrir un canal de communication RF avec un autre lecteur, transférer au module de sécurité amovible des données d'application reçues par l'intermédiaire du canal de communication RF, et envoyer dans le canal de communication RF des données d'application reçues du module de sécurité amovible,
- une liaison électrique non amovible reliant le circuit d'émulation (17) au circuit d'interface passif (16), au moyen de laquelle le signal de données (SDTr) et le signal d'horloge RF (CK0) sont fournis au circuit d'émulation (17), et
- un bus de données (173, DB3) cadencé par un signal d'horloge de bus (CK2) de fréquence inférieure à la fréquence (Fc) du signal d'horloge RF, pour relier le circuit d'émulation (17) au module de sécurité amovible (40, 43).

2. Lecteur selon la revendication 1, dans lequel le circuit d'interface passif (16) et le circuit d'émulation (17) sont agencés sur une même plaquette de semi-conducteur.

3. Lecteur selon l'une des revendications 1 et 2, dans lequel le circuit d'émulation (17) comprend un registre d'identification (171) contenant au moins un identificateur (ID) utilisé par le circuit d'émulation pour l'identification du lecteur pendant l'ouverture du canal de communication RF.

4. Lecteur selon l'une des revendications 1 à 3, dans lequel le circuit d'émulation (17) comprend une mémoire tampon (170) pour mémoriser des données d'application reçues via le canal de communication RF, avant de les transférer au module de sécurité amovible (40, 43).

5. Lecteur selon la revendication 4, dans lequel la mémoire tampon comprend au moins une pile FIFO (170-1) comprenant une entrée recevant des données reçues via le canal de communication RF et une sortie reliée au bus de données (173, DB3) pour envoyer ces données au module de sécurité amovible.

6. Lecteur selon l'une des revendications 1 à 5, dans lequel le circuit d'interface passif (16) extrait du circuit d'antenne une tension d'alimentation continue (Vcce), le circuit d'émulation (17) et le module de sécurité amovible (40, 43) étant exclusivement alimentés par cette tension continue.

7. Lecteur selon l'une des revendications 1 à 6, dans lequel le bus de données (DB3) est un bus ISO 7816.

8. Lecteur selon l'une des revendications 1 à 7, dans lequel le signal d'horloge de bus (CK2) présente une fréquence au moins 25 fois inférieure à la fréquence du signal d'horloge RF.

9. Lecteur selon l'une des revendications 1 à 8, comprenant un circuit de téléphonie GSM (11) relié à une carte SIM (20) via un bus de données (DB1).

10. Lecteur (60) selon la revendication 9, dans lequel la carte SIM et le module de sécurité amovible ne forment qu'un seul et même module.

11. Lecteur selon la revendication 10, dans lequel le circuit d'émulation (17) et le circuit de téléphonie GSM (11) accèdent au module de sécurité amovible (40) par un bus commun (DB4) partagé au moyen d'un circuit de multiplexage de bus (MUXB).

12. Dispositif portable de type PDA ou téléphone mobile, comprenant un lecteur selon l'une des revendications 1 à 11.

13. Procédé pour mettre en oeuvre un mode de fonctionnement passif dans un lecteur à couplage inductif (50, 60) comprenant un circuit d'interface passif (16) et un module de sécurité amovible (40, 43), le circuit d'interface passif (16) étant prévu pour moduler l'impédance d'un circuit d'antenne (13) et extraire du circuit d'antenne un signal de données (SDTr) et un signal d'horloge RF (CK0), le module de sécurité amovible (40, 43) étant prévu pour gérer une application sécurisée,
**caractérisé en ce qu'**il comprend les étapes consistant à :
- prévoir un circuit d'émulation (17) distinct du module de sécurité amovible et connecter le circuit d'émulation (17) au circuit d'interface passif (16) au moyen d'une liaison électrique non amovible au moyen de laquelle le signal de données (SDTr) et le signal d'horloge RF (CK0) sont fournis au circuit d'émulation (17),
- ouvrir un canal de communication RF au moyen du circuit d'émulation (17), transférer au module de sécurité amovible des données d'application reçues par le circuit d'émulation par l'intermédiaire du canal de communication RF, et envoyer dans le canal de communication RF des données d'application reçues du module de sécurité amovible par le circuit d'émulation, et
- relier le circuit d'émulation (17) au module de sécurité amovible (40, 43) au moyen d'un bus de données (173, 434, DB3) cadencé par un signal d'horloge de bus (CK2) de fréquence inférieure à la fréquence (Fc) du signal d'horloge RF.

14. Procédé selon la revendication 13, dans lequel le circuit d'interface passif (16) et le circuit d'émulation (17) sont agencés sur une même plaquette de semi-conducteur.

15. Procédé selon l'une des revendications 13 et 14, comprenant une étape consistant à prévoir, dans le circuit d'émulation (17), un registre d'identification (171) contenant au moins un identificateur (ID) utilisable par le circuit d'émulation pour l'identification du lecteur pendant l'ouverture du canal de communication RF.

16. Procédé selon l'une des revendications 13 à 15, comprenant une étape consistant à prévoir, dans le circuit d'émulation (17), une mémoire tampon (170) pour mémoriser des données d'application reçues via le canal de communication RF, avant de les transférer au module de sécurité amovible (40, 43).

17. Procédé selon l'une des revendications 15 et 16, comprenant une étape consistant à prévoir, dans le circuit d'émulation (17), au moins une pile FIFO (170-1) comprenant une entrée recevant des données reçues via le canal de communication RF et une sortie reliée au bus de données (173, DB3) pour envoyer ces données au module de sécurité amovible.

18. Procédé selon l'une des revendications 13 à 17, comprenant une étape d'extraction d'une tension d'alimentation continue (Vcce) du circuit d'antenne et une étape d'application de cette tension au circuit d'émulation (17) et au module de sécurité amovible (40, 43) en tant que tension d'alimentation exclusive.

19. Procédé selon l'une des revendications 13 à 18, dans lequel le bus de données (DB3) utilisé est un bus ISO 7816.

20. Procédé selon l'une des revendications 13 à 19, dans lequel le signal d'horloge de bus (CK2) présente une fréquence au moins 25 fois inférieure à la fréquence du signal d'horloge RF (CK0).

21. Procédé selon l'une des revendications 13 à 20, dans lequel le lecteur est associé à un circuit de téléphonie GSM (11) relié à une carte SIM, et dans lequel la carte SIM et le module de sécurité amovible ne forment qu'un seul et même module.

22. Procédé selon la revendication 21, comprenant une étape consistant à prévoir un bus commun (DB4) partagé par le circuit d'émulation (17) et le circuit de téléphonie GSM (11) pour accéder au module de sécurité amovible (40).

23. Lecteur à couplage inductif sous forme de circuit intégré sur microplaquette de semi-conducteur (ICRD1, ICRD2), **caractérisé en ce qu'**il comprend :
- un premier port (P1) pour connecter le circuit intégré à un circuit d'antenne (13) et un deuxième port (P2) pour connecter le circuit intégré à un module de sécurité amovible (40, 43),
- un circuit d'interface passif (16) pour moduler l'impédance d'un circuit d'antenne (13) et extraire du circuit d'antenne un signal de données (SDTr) et un signal d'horloge RF (CK0),
- un circuit d'émulation (17) pour ouvrir un canal de communication RF avec un autre lecteur, puis transférer sur le deuxième port (P2) des données d'application reçues par l'intermédiaire du canal de communication RF, et envoyer dans le canal de communication RF des données d'application reçues via le deuxième port (P2), et
- une liaison électrique non amovible reliant le circuit d'émulation (17) au circuit d'interface passif (16), au moyen de laquelle le signal de données (SDTr) et le signal d'horloge RF (CK0) sont fournis au circuit d'émulation (17).

24. Lecteur intégré sur microplaquette de semi-conducteur selon la revendication 23, dans lequel le circuit d'émulation (17) comprend un registre d'identification (171) contenant au moins un identificateur (ID) utilisé par le circuit d'émulation pour l'identification du lecteur pendant l'ouverture du canal de communication RF.

25. Lecteur intégré sur microplaquette de semi-conducteur selon l'une des revendications 23 et 24, dans lequel le circuit d'émulation (17) comprend une mémoire tampon (170) pour mémoriser des données d'application reçues via le canal de communication RF, avant de les transférer sur le deuxième port (P2).

26. Lecteur intégré sur microplaquette de semi-conducteur selon la revendication 25, dans lequel la mémoire tampon comprend au moins une pile FIFO (170-1) comprenant une entrée recevant des données reçues via lé canal de communication RF et une sortie reliée au deuxième port (P2) pour envoyer ces données au module de sécurité amovible.

27. Lecteur intégré sur microplaquette de semi-conducteur selon l'une des revendications 23 à 26, dans lequel le circuit d'interface passif (16) comprend un circuit (PSE) pour extraire du circuit d'antenne (13) une tension d'alimentation continue (Vcce) et dans lequel le circuit d'émulation (17) et le module de sécurité amovible (40, 43) sont exclusivement alimentés par cette tension continue.

28. Lecteur intégré sur microplaquette de semi-conducteur selon l'une des revendications 23 à 27, comprenant en outre un circuit (12) de lecture de carte à puce sans contact, agencé pour appliquer sur le premier port (P1) un signal d'excitation du circuit d'antenne, et un troisième port (P3) relié au circuit de lecture (12), pour connecter le circuit intégré à un circuit externe (11) de contrôle du circuit de lecture (12).

29. Lecteur intégré sur microplaquette de semi-conducteur selon l'une des revendications 23 à 28, comprenant un circuit de gestion de bus (173) relié au deuxième port (P2), et un circuit (172) pour extraire du signal d'horloge RF (CK0) un signal d'horloge de bus (CK2) de fréquence inférieure à la fréquence (Fc) du signal d'horloge RF, et appliquer le signal d'horloge de bus (CK2) au circuit de gestion de bus (173).

30. Lecteur intégré sur microplaquette de semi-conducteur selon la revendication 29, dans lequel le circuit de gestion de bus (173) assure une gestion de bus ISO 7816.

31. Lecteur intégré sur microplaquette de semi-conducteur selon l'une des revendications 29 et.30, dans lequel le circuit (172) pour extraire du signal d'horloge RF (CK0) un signal d'horloge de bus (CK2) est agencé pour fournir un signal d'horloge de bus (CK2) de fréquence au moins 25 fois inférieure à la fréquence du signal d'horloge RF.

32. Lecteur intégré sur microplaquette de semi-conducteur (ICRD2) selon l'une des revendications 29 à 31, comprenant un circuit de multiplexage de bus (MUXB) ayant une sortie reliée au deuxième port (P2), une première entrée reliée au circuit de gestion de bus (173), et une seconde entrée reliée à un quatrième port (P4) du circuit intégré.

## Claims

1. An inductive coupling reader (50,60), comprising a passive interface circuit (16) to modulate the impedance of an antenna circuit (13) and to extract from the antenna circuit a data signal (SDTr) and a RF clock signal (CK0), and means (173, DB3, 1030) for coupling the reader to a removable security module (40, 43),
**characterized in that** it further comprises:
- an emulation circuit (17) to open a RF transmission channel with another reader, to transfer to the removable security module application data received through the RF transmission channel, and to send in the RF transmission channel application data received from the removable security module,
- a non-removable electrical link to link the emulation circuit (17) to the passive interface circuit (16), by which the data signal (SDTr) and the RF clock signal (CK0) are supplied to the emulation circuit (17), and
- a data bus (173, DB3) clocked by a bus clock signal (CK2), having a frequency inferior to a frequency (Fc) of the RF clock signal, to link the emulation circuit (17) to the removable security module (40, 43).

2. The reader according to claim 1, wherein the passive interface circuit (16) and the emulation circuit (17) are arranged on a same semi-conductor chip.

3. The reader according to claim 1 or 2, wherein the emulation circuit (17) includes an identification register (171) having at least one identifier (ID) used by the emulation circuit to identify the reader during opening of the RF transmission channel.

4. The reader according to any of claims 1 to 3, wherein the emulation circuit (17) includes a buffer memory (170) to store application data received via the RF transmission channel, before transfer to the removable security module (40, 43).

5. The reader according to claim 4, wherein the buffer memory includes at least one FIFO buffer (170-1) having an input to receive data received via the RF transmission channel and an output linked to the data bus (173, DB3) to send these data to the removable security module.

6. The reader according to any of claims 1 to 5, wherein the passive interface circuit (16) extracts from the antenna circuit a D.C. supply voltage (Vcce), the emulation circuit (17) and the removable security module (40, 43) being exclusively powered by this D.C. voltage.

7. The reader according to any of claims 1 to 6, wherein the data bus (DB3) is a ISO 7816 bus.

8. The reader according to any of claims 1 to 7, wherein the bus clock signal (CK2) has a frequency at least 25 times inferior to the frequency of the RF clock signal.

9. The reader according to any of claims 1 to 8, comprising a GSM telephony circuit (11) linked to a SIM card (20) via a data bus (DB1).

10. The reader (60) according to claim 9, wherein the SIM card and the removable security module form only one module.

11. The reader according to claim 10, wherein the emulation circuit (17) and the GSM telephony circuit (11) access the removable security module (40) by a common bus (DB4) shared through a bus multiplexing circuit (MUXB).

12. A portable device of a PDA or mobile phone type, comprising a reader according to any of claims 1 to 11.

13. A method for implementing a passive operating mode in an inductive coupling reader (50, 60) having a passive interface circuit (16) and a removable security module (40, 43), the passive interface circuit (16) being adapted to modulate the impedance of an antenna circuit (13) and to extract from the antenna circuit a data signal (SDTr) and a RF clock signal (CK0), the removable security module (40, 43) being adapted to manage a secure application,
**characterized in that** it comprises the following steps:
- providing an emulation circuit (17) distinct from the removable security module and coupling the emulation circuit (17) to the passive interface circuit (16) through a non-removable electrical link by which the data signal (SDTr) and the RF clock signal (CK0) are supplied to the emulation circuit (17),
- opening a RF transmission channel using the emulation circuit (17), transferring to the removable security module application data received by the emulation circuit through the RF transmission channel, and sending in the RF transmission channel application data received from the removable security module by the emulation circuit, and
- linking the emulation circuit (17) to the removable security module (40, 43) using a data bus (173, 434, DB3) clocked by a bus clock signal (CK2) having a frequency inferior to a frequency (Fc) of the RF clock signal.

14. The method according to claim 13, wherein the passive interface circuit (16) and the emulation circuit (17) are arranged on a same semi-conductor chip.

15. The method according to claim 13 or 14, comprising a step of providing, in the emulation circuit (17), an identification register (171) having at least one identifier (ID) usable by the emulation circuit to identify the reader during the opening of the RF transmission channel.

16. The method according to any of claims 13 to 15, comprising a step of providing, in the emulation circuit (17), a buffer memory (170) to store application data received via the RF transmission channel, before transferring said data to the removable security module (40, 43).

17. The method according to claim 15 or 16, comprising a step of providing, in the emulation circuit (17), at least one FIFO buffer (170-1) having an input to receive data received via the RF transmission channel and an output linked to the data bus (173, DB3) to send these data to the removable security module.

18. The method according to any of claims 13 to 17, comprising a step of extracting a D.C. supply voltage (Vcce) from the antenna circuit and a step of applying this voltage to the emulation circuit (17) and to the removable security module (40, 43) as exclusive supply voltage.

19. The method according to any of claims 13 to 18, wherein the data bus (DB3) used is a ISO 7816 bus.

20. The method according to any of claims 13 to 19, wherein the bus clock signal (CK2) has a frequency at least 25 times inferior to the frequency of the RF clock signal (CK0).

21. The method according to any of claims 13 to 20, wherein the reader is associated to a GSM telephony circuit (11) linked to a SIM card, and wherein the SIM card and the removable security module form only one module.

22. The method according to claim 21, comprising a step of providing a common bus (DB4) shared by the emulation circuit (17) and the GSM telephony circuit (11) to access the removable security module (40).

23. An inductive coupling reader formed as an integrated circuit on a semi-conductor chip (ICRD1, ICRD2), **characterized in that** it comprises:
- a first port (P1) to couple the integrated circuit to an antenna circuit (13) and a second port (P2) to couple the integrated circuit to a removable security module (40, 43),
- a passive interface circuit (16) to modulate the impedance of an antenna circuit and to extract from the antenna circuit a data signal (SDTr) and a RF clock signal (CK0),
- an emulation circuit (17) to open a RF transmission channel with another reader, then to transfer to the second port (P2) application data received through the RF transmission channel, and to send in the RF transmission channel application data received via the second port, and
- a non-removable electrical link to link the emulation circuit (17) to the passive interface circuit (16), by which the data signal (SDTr) and the RF clock signal (CK0) are supplied to the emulation circuit (17).

24. The reader formed as an integrated circuit on a semi-conductor chip according to claim 23, wherein the emulation circuit (17) includes an identification register (171) having at least one identifier (ID) used by the emulation circuit to identify the reader during opening of the RF transmission channel.

25. The reader formed as an integrated circuit on a semi-conductor chip according to claim 23 or 24, wherein the emulation circuit (17) includes a buffer memory (170) to store application data received via the RF transmission channel, before transfer to the second port (P2).

26. The reader formed as an integrated circuit on a semi-conductor chip according to claim 25, wherein the buffer memory includes at least one FIFO buffer (170-1) having an input to receive data received via the RF transmission channel and an output linked to the second port (P2) to send these data to the removable security module.

27. The reader formed as an integrated circuit on a semi-conductor chip according to any of claims 23 to 26, wherein the passive interface circuit (16) includes a circuit (PSE) to extract from the antenna circuit (13) a D.C. supply voltage (Vcce) and wherein the emulation circuit (17) and the removable security module (40, 43) are exclusively powered by this D.C. voltage.

28. The reader formed as an integrated circuit on a semi-conductor chip according to any of claims 23 to 27, further comprising a contactless chip reader circuit (12), arranged to apply to the first port (P1) a signal to excite the antenna circuit, and a third port (P3) linked to the reader circuit (12), to couple the integrated circuit to an external circuit (11) to control the reader circuit (12).

29. The reader formed as an integrated circuit on a semi-conductor chip according to any of claims 23 to 28, comprising a bus management circuit (173) linked to the second port (P2), and a circuit (172) to extract from the RF clock signal (CK0) a bus clock signal (CK2) having a frequency inferior to a frequency (Fc) of the RF clock signal, and to apply the bus clock signal (CK2) to the bus management circuit (173).

30. The reader formed as an integrated circuit on a semi-conductor chip according to claim 29, wherein the bus management circuit (173) is adapted to manage a ISO 7816 bus.

31. The reader formed as an integrated circuit on a semi-conductor chip according to claim 29 or 30, wherein the circuit (172) to extract from the RF clock signal (CK0) a bus clock signal (CK2) is arranged to supply a bus clock signal (CK2) having a frequency that is at least 25 times inferior to the frequency of the RF clock signal.

32. The reader formed as an integrated circuit on a semi-conductor chip (ICRD2) according to any of claims 29 to 31, comprising a bus multiplexing circuit (MUXB) having an output linked to the second port (P2), a first input linked to the bus management circuit (173), and a second input linked to a fourth port (P4) of the integrated circuit.

## Patentansprüche

1. Induktiver Kopplungsleser (50, 60), der einen passiven Interface-Schaltkreis (16) aufweist, um die Impedanz eines Antennenschaltkreises (13) zu modulieren und um von dem Antennenschaltkreis ein Datensignal (SDTr) und ein HF-Takt-Signal (CK0) zu extrahieren, und Mittel (173, DB3, 1030) zum Koppeln des Lesers an ein entfernbares Sicherheitsmodul (40, 43),
**dadurch gekennzeichnet, dass** er folgendes aufweist:
- einen Emulationsschaltkreis (17) zum Öffnen eines HF-Übertragungskanals mit einem weiteren Leser, um an das entfernbare Sicherheitsmodul Anwendungsdaten zu übermitteln, die über den HF-Übertragungskanal empfangen wurden, und zum Senden von Anwendungsdaten über den HF-Übertragungskanal, die von dem entfernbaren Sicherheitsmodul empfangen wurden, ,
- eine nicht-entfernbare elektrische Verbindung zum Verbinden des Emulationsschaltkreis (17) mit dem passiven Interface-Schaltkreis (16), durch den das Datensignal (SDTr) und das HF-Takt-Signal (CK0) dem Emulationsschaltkreis (17) bereitgestellt werden, und
- einen Datenbus (173, DB3), der durch ein Bus-Takt-Signal (CK2) getaktet wird und eine geringere Frequenz als eine Frequenz (Fc) des HF-Takt-Signals aufweist, um den Emulationsschaltkreis (17) mit dem entfernbaren Sicherheitsmodul (40, 43) zu verbinden.

2. Leser gemäß Anspruch 1, wobei der passive Interface-Schaltkreis (16) und der Emulationsschaltkreis (17) auf einem selben Halbleiterchip angeordnet sind.

3. Leser gemäß Anspruch 1 oder 2, wobei der Emulationsschaltkreis (17) ein Identifikationsregister (171) beinhaltet, das wenigstens einen Identifizierer (ID) aufweist, der durch den Emulationsschaltkreis benutzt wird, um den Leser während des Öffnens des HF-Übertragungskanals zu identifizieren.

4. Leser gemäß einem der Ansprüche 1 bis 3, wobei der Emulationsschaltkreis (17) einen Pufferspeicher (170) beinhaltet, um die Anwendungsdaten, die über den HF-Übertragungskanal empfangen wurden, vor der Übermittlung an das entfernbare Sicherheitsmodul (40, 43) zu speichern.

5. Leser gemäß Anspruch 4, wobei der Pufferspeicher wenigstens einen FIFO-Speicher (170-1) beinhaltet, der einen Eingang zum Empfangen von Daten, die über den HF-Übertragungskanal empfangen wurden und einen Ausgang, der mit dem Datenbus (173, DB3) verbunden ist aufweist, um diese Daten an das entfernbare Sicherheitsmodul zu senden.

6. Leser gemäß einem der Ansprüche 1 bis 5, wobei der passive Interface-Schaltkreis (16) von dem Antennenschaltkreis eine D.C.-Spannungsversorgung (Vcce) extrahiert, wobei der Emulationsschaltkreis (17) und das entfernbare Sicherheitsmodul (40, 43) ausschließlich über diese D.C.-Spannung versorgt werden.

7. Leser gemäß einem der Ansprüche 1 bis 6, wobei der Datenbus (DB3) ein ISO 7816-Bus ist.

8. Leser gemäß einem der Ansprüche 1 bis 7, wobei das Bus-Takt-Signal (CK2) eine Frequenz aufweist, die wenigstens 25-mal kleiner als die Frequenz des HF-Takt-Signals ist.

9. Leser gemäß einem der Ansprüche 1 bis 8, der einen GSM-Telefonie-Schaltkreis (11) aufweist, der mit einer SIM-Karte (20) über einen Datenbus (DB1) verbunden ist.

10. Leser (60) gemäß Anspruch 9, wobei die SIM-Karte und das entfernbare Sicherheitsmodul nur ein Modul bilden.

11. Leser gemäß Anspruch 10, wobei der Emulationsschaltkreis (17) und der GSM-Telefonie-Schaltkreis (11) auf das entfernbare Sicherheitsmodul (40) über einen gemeinsamen Bus (DB4) zugreifen, der über einen Bus-Multiplexschaltkreis (MUXB) gemeinsam benutzt wird.

12. Tragbare Einheit eines PDA- oder Mobiltelefontyps, das einen Leser gemäß einem der Ansprüche 1 bis 11 aufweist.

13. Verfahren zum Implementieren eines passiven Betriebsmodus in einem induktiven Kopplungsleser (50, 60), der einen passiven Interface-Schaltkreis (16) aufweist und ein entfernbares Sicherheitsmodul (40, 43), wobei der passive Interface-Schaltkreis (16) geeignet ist, die Impedanz des Antennenschaltkreis (13) zu modulieren und ein Datensignal (SDTr) und ein HF-Takt-Signal (CK0) aus dem Antennenschaltkreis zu extrahieren, wobei das entfernbare Sicherheitsmodul (40, 43) geeignet ist, eine sichere Anwendung zu betreiben, **dadurch gekennzeichnet, dass** es folgende Schritte aufweist:
- Bereitstellen eines Emulationsschaltkreises (17), der unterschiedlich zu dem entfernbaren Sicherheitsmodul ist und Koppeln des Emulationsschaltkreises (17) an den passiven Interface-Schaltkreis (16) über eine nicht-entfernbare elektrische Verbindung, durch die das Datensignal (SDTr) und das HF-Takt-Signal (CK0) dem Emulationsschaltkreis (17) bereitgestellt wird,
- Öffnen eines HF-Übertragungskanals, unter Verwendung des Emulationsschaltkreises (17), wobei an das entfernbare Sicherheitsmodul Anwendungsdaten übertragen werden, die durch den Emulationsschaltkreis über den HF-Übertragungskanal empfangen werden und Senden von Anwendungsdaten über den HF-Übertragungskanal, die durch den Emulationsschaltkreis von dem entfernbaren Sicherheitsmodul empfangen werden, und
- Verbinden des Emulationsschaltkreises (17) mit dem entfernbaren Sicherheitsmodul (40, 43) unter Verwendung eines Datenbus (173, 434, DB3), der durch ein Bus-Takt-Signal (CK2) getaktet wird, das eine Frequenz aufweist, die geringer als eine Frequenz (Fc) des HF-Takt-Signals ist.

14. Verfahren gemäß Anspruch 13, wobei der passive Interface-Schaltkreis (16) und der Emulationsschaltkreis (17) auf demselben Halbleiterchip angeordnet sind.

15. Verfahren gemäß Anspruch 13 oder 14, das einen Schritt des Bereitstellens eines Identifikationsregisters (171) in dem Emulationsschaltkreis (17) aufweist, das wenigstens einen Identifizierer (ID), der durch den Emulationsschaltkreis benutzt werden kann, um den Leser während des Öffnens des HF-Übertragungskanals zu identifizieren, aufweist.

16. Verfahren gemäß einem der Ansprüche 13 bis 15, das einen Schritt des Bereitstellens eines Pufferspeichers (170) in dem Emulationsschaltkreis (17) aufweist, um Anwendungsdaten vor dem Übertragen dieser Daten an das entfernbare Sicherheitsmodul (40, 43) zu speichern, die über den HF-Übertragungskanal empfangen wurden.

17. Verfahren gemäß Anspruch 15 oder 16, das einen Schritt des Bereitstellens wenigstens eines FIFO-Puffers (170-1) in dem Emulationsschaltkreis (17) aufweist, der einen Eingang zum Empfangen von Daten, die über den HF-Übertragungskanal empfangen wurden und einen Ausgang, der mit dem Datenbus (173, DB3) verbunden ist, um diese Daten an das entfernbare Sicherheitsmodul zu senden, aufweist.

18. Verfahren gemäß einem der Ansprüche 13 bis 17, das einen Schritt des Extrahierens einer D.C.-Spannungsversorgung (Vcce) von dem Antennenschaltkreis aufweist und einen Schritt des Anlegens dieser Spannung an den Emulationsschaltkreis (17) und an das entfernbare Sicherheitsmodul (40, 43) als ausschließliche Spannungsversorgung.

19. Verfahren gemäß einem der Ansprüche 13 bis 18, wobei der benutzte Datenbus (DB3) ein ISO 7816-Bus ist.

20. Verfahren gemäß einem der Ansprüche 13 bis 19, wobei das Bus-Takt-Signal (CK2) eine Frequenz aufweist, die wenigstens 25-mal kleiner ist als die Frequenz des HF-Takt-Signals (CK0).

21. Verfahren gemäß einem der Ansprüche 13 bis 20, wobei der Leser einem GSM-Telefonie-Schaltkreis (11) zugeordnet ist, der mit einer SIM-Karte verbunden ist, und wobei die SIM-Karte und das entfernbare Sicherheitsmodul nur ein Modul bilden.

22. Verfahren gemäß Anspruch 21, das einen Schritt des Bereitstellens eines gemeinsamen Busses (DB4) aufweist, welcher durch den Emulationsschaltkreis (17) und den GSM-Telefonie-Schaltkreis (11) gemeinsam benutzt wird, um auf das entfernbare Sicherheitsmodul (40) zuzugreifen.

23. Induktiver Kopplungsleser, der als integrierter Schaltkreis auf einem Halbleiterchip (ICRD1, ICRD2) ausgebildet ist, **gekennzeichnet durch**:
- einen ersten Anschluss (P1) zum Koppeln des integrierten Schaltkreises an einen Antennenschaltkreis (13) und einen zweiten Anschluss (P2) zum Koppeln des integrierten Schaltkreises an ein entfernbares Sicherheitsmodul (40, 43),
- einen passiven Interface-Schaltkreis (16) zum Modulieren der Impedanz eines Antennenschaltkreises und zum Extrahieren eines Datensignal (SDTr) und eines HF-Takt-Signals (CK0) von dem Antennenschaltkreis,
- einen Emulationsschaltkreis (17) zum Öffnen eines HF-Übertragungskanals mit einem weiteren Leser, und zum Übertragen von Anwendungsdaten an den zweiten Anschluss (P2), die über den HF-Übertragungskanal empfangen wurden, und zum Senden von Anwendungsdaten über den HF-Übertragungskanal, die über den zweiten Anschluss empfangen wurden, und
- eine nicht-entfernbare elektrische Verbindung zum Verbinden des Emulationsschaltkreises (17) mit dem passiven Interface-Schaltkreis (16), **durch** die das Datensignal (SDTr) und das HF-Takt-Signal (CK0) dem Emulationsschaltkreis (17) bereitgestellt werden.

24. Leser, der als integrierter Schaltkreis auf einem Halbleiterchip ausgebildet ist, gemäß Anspruch 23, wobei der Emulationsschaltkreis (17) ein Identifikationsregister (171) beinhaltet, das wenigstens einen Identifizierer (ID) aufweist, welcher von dem Emulationsschaltkreis zum Identifizieren des Lesers während des Öffnens des HF-Übertragungskanals benutzt wird.

25. Leser, der als integrierter Schaltkreis auf einem Halbleiterchip ausgebildet ist, gemäß einem der Ansprüche 23 oder 24, wobei der Emulationsschaltkreis (17) einen Pufferspeicher (170) zum Speichern von Anwendungsdaten vor dem Übertragen an den zweiten Anschluss (P2) aufweist, die über den HF-Übertragungskanal empfangen wurden.

26. Leser, der als integrierter Schaltkreis auf einem Halbleiterchip ausgebildet ist, gemäß Anspruch 25, wobei der Pufferspeicher wenigstens einen FIFO-Puffer (170-1) beinhaltet, der einen Eingang zum Empfangen von Daten, die über den HF-Übertragungskanal empfangen wurden und einen Ausgang, der mit dem zweiten Anschluss (P2) verbunden ist aufweist, um diese Daten an das entfernbare Sicherheitsmodul zu senden.

27. Leser, der als integrierter Schaltkreis auf einem Halbleiterchip ausgebildet ist, gemäß einem der Ansprüche 23 bis 26, wobei der passive Interface-Schaltkreis (16) einen Schaltkreis (PSE) zum Extrahieren einer D.C.-Spannungsversorgung (Vcce) von dem Antennenschaltkreis (13) beinhaltet, und wobei der Emulationsschaltkreis (17) und das entfernbare Sicherheitsmodul (40, 43) ausschließlich über diese D.C.-Spannung versorgt werden.

28. Leser, der als integrierter Schaltkreis auf einem Halbleiterchip ausgebildet ist, gemäß einem der Ansprüche 23 bis 27, der ferner einen kontaktlosen Chipleser-Schaltkreis (12) aufweist, welcher derart angeordnet ist, um an den ersten Anschluss (P1) ein Signal anzubringen, um den Antennenschaltkreis anzuregen und einen dritten Anschluss (P3), der mit dem Leserschaltkreis (12) verbunden ist, um den integrierten Schaltkreis mit einem externen Schaltkreis (11) zu verbinden, um den Leserschaltkreis (12) zu Steuern.

29. Leser, der als integrierter Schaltkreis auf einem Halbleiterchip ausgebildet ist, gemäß einem der Ansprüche 23 bis 28, der ferner einen Bus-Managementschaltkreis (173) aufweist, der mit dem zweiten Anschluss (P2) verbunden ist, und einen Schaltkreis (172), um von dem HF-Takt-Signal (CK0) ein Bus-Takt-Signal (CK2) zu extrahieren, das eine Frequenz aufweist, die geringer ist als eine Frequenz (FC) des HF-Takt-Signals, und zum Anlegen des Bus-Takt-Signals (CK2) an den Bus-Managementschaltkreis (173).

30. Leser, der als integrierter Schaltkreis auf einem Halbleiterchip ausgebildet ist, gemäß Anspruch 29, wobei der Bus-Managementschaltkreis (173) geeignet ist einen ISO 7816-Bus zu betreiben.

31. Leser, der als integrierter Schaltkreis auf einem Halbleiterchip ausgebildet ist, gemäß Anspruch 29 oder 30, wobei der Schaltkreis (172) zum Extrahieren eines Bus-Takt-Signals (CK2) aus dem HF-Takt-Signal (CK0) angeordnet ist, um ein Bus-Takt-Signal (CK2), das eine Frequenz aufweist, die wenigstens 25-mal kleiner ist als die Frequenz des HF-Takt-Signals, bereitzustellen.

32. Leser, der als integrierter Schaltkreis auf einem Halbleiterchip (ICRD2) ausgebildet ist, gemäß einem der Ansprüche 29 bis 31, der ferner einen Bus-Multiplexschaltkreis (MUXB) aufweist, welcher einen Ausgang aufweist, der mit dem zweiten Anschluss (P2) verbunden ist, einen ersten Eingang, der mit dem Bus-Managementschaltkreis (173) verbunden ist und einen zweiten Eingang, der mit einem vierten Anschluss (P4) des integrierten Schaltkreises verbunden ist.
